# EUROPEAN PATENT SPECIFICATION

(11) **EP 1 802 814 B1**
(45) Date of publication and mention of the grant of the patent: **25.03.2009**
(21) Application number: 05787335.8
(22) Date of filing: 03.10.2005
(51) Int. Cl.: E02B 9/08, F03B 13/18

(54) **BREAKWATER WAVE ENERGY CONVERTER**
WELLENBRECHERWELLENENERGIEUMWANDLER
CONVERTISSEUR D'ENERGIE D'ONDES BRISE-LAMES

(30) Priority: 05.10.2004 GB 0422051
(43) Date of publication of application: 04.07.2007
(73) Proprietor: Roberts, Iain David, Redhill Surrey RH1 6DS (GB)
(72) Inventor: Roberts, Iain David, Redhill Surrey RH1 6DS (GB)
(86) International application number: PCT/GB2005/003796
(87) International publication number: WO 2006/037983

(56) References cited:
- WO-A-84/00583
- WO-A-84/01603
- WO-A-98/55764
- WO-A-03/033824
- AU-B2- 520 505
- DE-A1- 4 339 307
- FR-A- 2 409 395
- GB-A- 2 005 358
- GB-A- 2 401 404
- US-B1- 6 360 534
- PATENT ABSTRACTS OF JAPAN vol. 012, no. 352 (M-744), 21 September 1988 (1988-09-21) & JP 63 110312 A (KUBOTA LTD), 14 May 1988 (1988-05-14)
- PATENT ABSTRACTS OF JAPAN vol. 013, no. 025 (M-787), 20 January 1989 (1989-01-20) & JP 63 236809 A (KUBOTA LTD), 3 October 1988 (1988-10-03)
- PATENT ABSTRACTS OF JAPAN vol. 1998, no. 12, 31 October 1998 (1998-10-31) & JP 10 183566 A (KUBOTA CORP), 14 July 1998 (1998-07-14)

## Description

### Technical Field

The invention comprises a structure for the absorption of wave energy and the conversion of this energy into electrical or another type of readily useable energy.

### Background Art

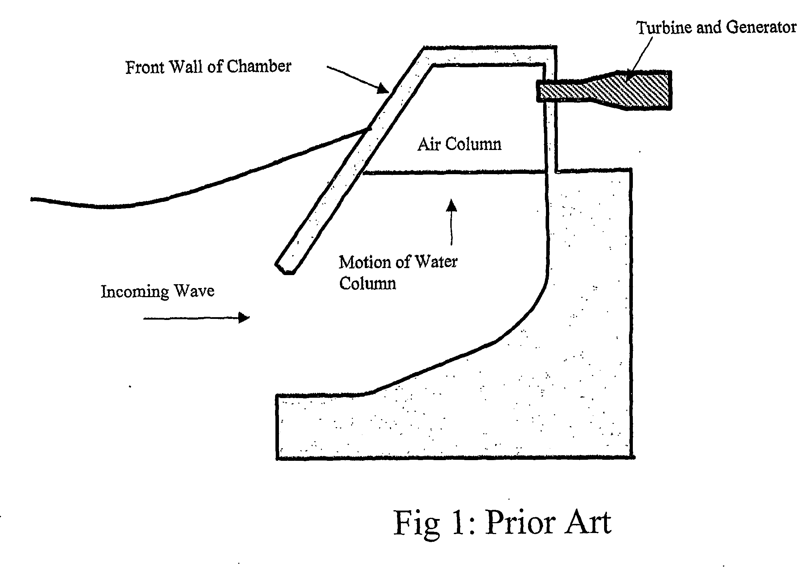

The Oscillating Water Column principle is a means of hydropneumatic energy conversion whereby an entrained volume of air is forced into damped harmonic motion by a rising and falling water surface. A number of shore based Oscillating Water Column (OWC) type wave energy devices have now been built around the world, refer to the prior art arrangement shown as Figure 1. These devices usually comprise a large enclosed chamber with an opening that is below lowest water level. Wave motion outside the chamber induces a rising and falling water level within the chamber, which in turn produces pressure changes in the air enclosed at the top of the chamber. Pneumatic to mechanical energy conversion is typically achieved by the use of a self rectifying turbine. Other devices for absorption of wave energy are disclosed in JP363110312, JP363236809, JP410183566, WO8401603, GB 2005 358, WO 9855764 and US6360534.

### Disclosure of Invention

### Technical Problem

The designs of these OWC devices have a number of disadvantages that limit both efficiency and application. In general, a large chamber is required such that the breath of the structure is a proportion of the distance between successive wave crests. This makes the structures bulky and also means that efficiency is reduced for upper and lower bound wave conditions.

Another problem is construction in the marine environment. Many of the devices constructed have been built on the shoreline or set within breakwater structures and have been constructed using reinforced concrete. This type of monolithic insitu construction is inherently difficult in marine conditions and special measures are required to protect the structure from the effects of waves while it is being built.

### Technical Solution

The device described in claim 1 overcomes these problems. The present invention applies the maritime rubble mound breakwater design to the OWC concept. Rubble mound breakwaters are built by placing a mound of stone rubble on the seabed and then protecting it with either large quarry rock or specially constructed concrete armour units that are of sufficient weight to resist the force of the most extreme waves.

The present invention comprises a sloping rubble mound breakwater structure with an outer layer of hollow concrete blocks that have a flexible tube placed within the voids of the blocks. Waves break on to and run up the structure causing the deformation of the flexible tube and the conversion of wave energy into a rising and failing fluid level within the flexible tube.

### Advantageous Effects

These structures provide an efficient means of absorbing wave energy with minimal wave reflection and transmission.

### Description of Drawings

A specific embodiment of the invention is now described by way of example with reference to the accompanying drawings in which: Figure 2 shows in cross section an arrangement for the structure against an existing structure, wall, or cliff. Figure 3 shows in plan an arrangement for this structure. Figure 4 shows in cross section an alternative arrangement as an offshore breakwater. Figure 5 shows in perspective a hollow block unit.

### Best Mode

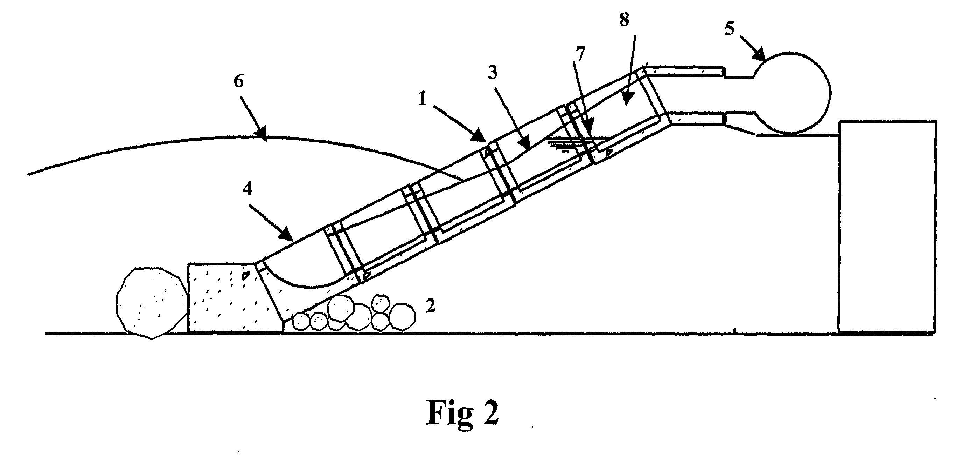

Figure 2 shows an arrangement where the structure is built against an existing breakwater, wall, or cliff. The structure comprises a layer of hollow blocks (1) laid on a sloping rubble mound (2). Within the hollow blocks is a flexible tube (3) that is open at the bottom (4) and fixed to an air chamber at the top (5). The whole structure is built on the sea bed and extends above still water level. As a wave breaks onto the structure the outside water level rises (6), water is drawn into the flexible tube (3) through the lower opening (4), the tube is also deformed by the force of the wave, and the water inside the tube is displaced upwards. As the water level inside the tube (7) rises, the air above the water (8) is compressed and flows into a connecting air chamber (5). This air chamber connects a plurality of other tubes and is itself connected to a turbine or turbines. The compressed air drives the turbine and some air is expelled. As the wave crest reaches its zenith and then starts to recede, water flows out of the flexible tube (3), the tube expands, the inside water level (7) drops, and air is drawn into the system through the turbine, or other device.

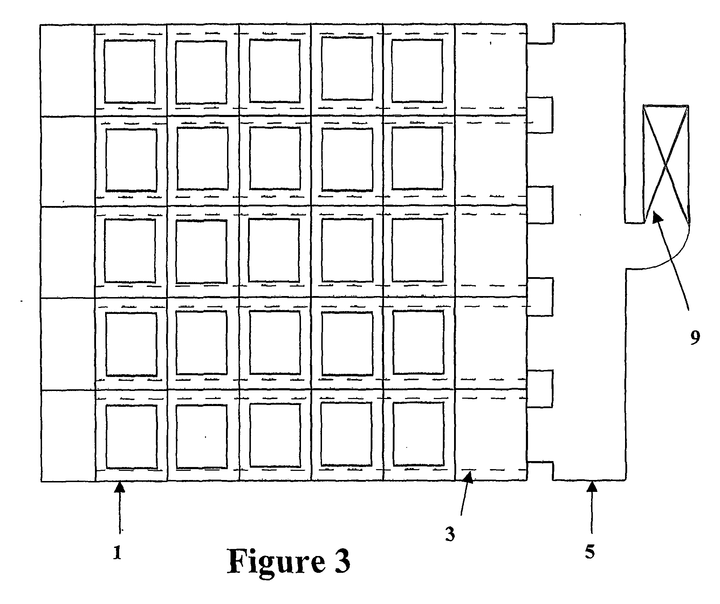

Figure 3 show a typical part plan view of the invention. The hollow blocks (1) are laid in a regular pattern on the rubble mound such that the flexible tube (3) can be placed within the blocks and connected to the air chamber (5). The air chamber (5) comprises an airtight pipe or chamber placed on top of the structure. A turbine (9) is then connected to the air chamber. The advantage of this arrangement is that the size of the porous armour blocks, flexible tube, air chamber and the number of turbines, can all be optimized for the expected wave conditions.

For the arrangement shown in Figure 2, a turbine that works for reversing directions of flow would be used to best effect. However, with the suitable use of valves an alternative arrangement using a single direction turbine could also be used. A dynamo or alternator connected to the turbine would then generate electricity.

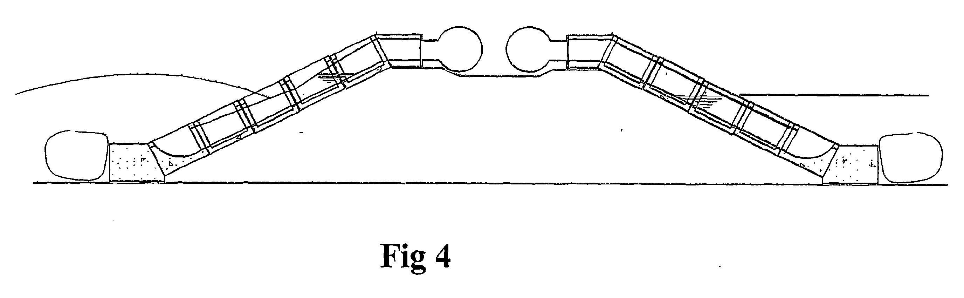

Figure 4 shows a typical section where the structure is constructed offshore. One or both sides of the structure can be constructed with hollow blocks. The alignment of the structure, in plan, can then be varied to optimize the incoming wave energy on one or both faces.

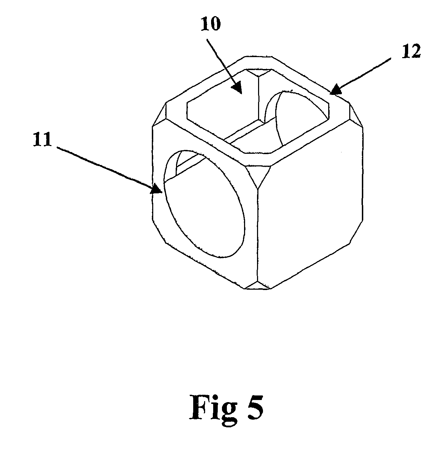

Figure 5 shows a typical arrangement for the hollow block. The block has an opening at the top (10), and side openings (11) and (12) to accommodate the flexible tube. The internal void can also be shaped to accommodate the flexible tube. The shape and size of the void and openings may vary. Additional openings may be added to the side walls or to the bottom wall.

These blocks are commonly used in coast protection revetments and port breakwaters and are usually referred to as single layer armour units. They are constructed of plain concrete, but steel or fibre reinforcement may be added for additional strength. The blocks are tightly placed to a regular pattern and achieve stability under wave loading by their self weight and importantly the friction between blocks. The blocks have a high porosity ratio and therefore have excellent wave energy absorption properties. These blocks have been in use since the 1970s and have been used in numerous revetment and breakwater structures.

The advantage of using these blocks is that they can be precast on land and then placed on the structure using a crane. The blocks can also be placed underwater. An alternative to using individually placed blocks would be to cast the surface layer insitu. This could be achieved by using suitable forms and void formers to achieve substantially the same result. However, this type of construction would be inherently more complex and susceptible to storm damage. The surface layer would also be rigid and would require steel reinforcement.

The hollow block shown in figure 5 is specifically designed for holding a flexible tube.

The flexible tube may comprise any suitable material being strong, airtight, flexible and durable. As the only moving part of the structure below water level, the tube will be subject to wear and will have to be replaced on a regular basis. The tube would be inserted into the voids of the armour blocks, and fixed to the lowest inlet block and fixed again to the top armour block. The fixings would be designed to aid replacement of the tube. An alternative arrangement would be to use a tube that is closed at the bottom end, thus becoming a bag. This bag would then be partially or entirely filled with a fluid.

### Mode for Invention

The present invention is based on the established OWC concept. However, the means of converting wave motion into pneumatic energy is novel in comparison to other wave energy devices. Rather than having a large collector chamber, waves break onto the sloping face of the structure and wave energy is absorbed due to the displacement of the flexible tube and also by the process of waves running up on the structure, known as 'wave runup'. This is a process where as waves break onto a sloping structure there is an increase in the local still water level followed by a wave up rush to a greater height than the incoming wave crest. This generates a rising and falling water level within the flexible tube that has a greater peak to trough height than the incident wave (eg for a smooth slope at a gradient of 1 in 2 the runup level would be about 2 x Hi, where Hi is the incident wave height). This means that a relatively small diameter tube, say 2 to 3m, could be used for most wave conditions. Another advantage of this type of structure is that it would have low wave reflection and should therefore be a more efficient wave energy absorber.

### Industrial Applicability

The whole structure is based on maritime breakwater design. The advantage is that the device is constructed using existing breakwater technology and construction plant. The rubble mound and armour units can be placed in open water conditions provided that wave heights are within acceptable limits. Another advantage is the use of flexible materials and a sloping structure.

The device may be constructed for the purpose of wave energy conversion, or may have a dual purpose as a port structure such as a breakwater. The device may also be combined with wind turbines or used in combination with tidal energy generation or for water desalination.

## Claims

1. A device for absorption of wave energy comprising:
at least one hollow block (1) supportable on a sloped surface;
at least one deformable tubular water-receiving member (3) held within the at least one hollow block, wherein the deformation of said tubular member is caused by the waves action, therfore absorbing their energy.

2. A device for absorption of wave energy according to claim 1 wherein the wave-receiving surface of the at least one hollow block defines at least one opening and there are at least two further openings that accommodate the tubular member.

3. A device for absorption of wave energy according to any preceding claim comprising two or more hollow blocks arranged in a regular pattern such that two or more tubular members are held within the blocks.

4. A device for absorption of wave energy according to any preceding claim wherein the at least one tubular water-receiving member is connected to an air chamber.

5. A device for absorption of wave energy according to claim 4 wherein the air chamber is connected to at least one turbine.

6. A device absorption of wave energy according to claim 5 wherein the at least one further tubular member is connected to a turbine by the air chamber.

7. A device for absorption of wave energy according to claims 5 to 6 wherein the at least one turbine is connected to a dynamo or an alternator.

## Patentansprüche

1. Ein Gerät für die Aufnahme von Wellenenergie aus: mindestens einem hohlen Block (1) auf einer geneigten Fläche unterlegt, mit mindestens einem verformbaren tubulären Wasser-Empfangglied (3) innerhalb des mindestens einen hohlen Blockes, wobei das genannte tubuläre Glied durch die Wellen verformt wird und daher ihre Energie aufnimmt.

2. Ein Gerät für die Aufnahme von Wellenenergie nach Anspruch 1 in die Wellenempfangoberfläche von mindestens einem hohlen Block definiert mit mindestens einer Öffnung, und es gibt mindestens zwei weitere Öffnungen, wo sich die tubuläre Glieder befinden.

3. Ein Gerät für die Aufnahme von Wellenenergie nach einem vorhergehenden Anspruch, bestehend aus zwei oder mehreren Hohlblöcken in einem regelmäßigen Muster, so dass zwei oder mehr tubuläre Glieder innerhalb der Blöcke sind.

4. Ein Gerät für die Aufnahme von Wellenenergie nach einem vorhergehenden Anspruch bei der mindestens ein Wasserempfangsgliedrohr mit einer Luftkammer verbunden ist.

5. Ein Gerät für die Aufnahme von Wellenenergie nach Anspruch 4, wodurch die Luftkammer an mindestens einer Turbine verbunden ist.

6. Ein Gerät für die Aufnahme von Wellenenergie nach Anspruch 5, wobei mindestens eine weiteres tubuläres Glied mit einer Turbine durch die Luftkammer verbunden ist.

7. Ein Gerät für die Aufnahme von Wellenenergie nach Ansprüche 5 bis 6, wobei mindestens eine Turbine mit einem Dynamo oder einem Generator verbunden ist.

## Revendications

1. Un dispositif d'absorption d'énergie houlomotrice comprenant :Au moins un bloc creux (1) supportable sur une surface inclinée;Au moins un membre tubulaire déformable (3) recevant de l'eau et tenu dans au moins un bloc creux, dans lequel la déformation du dit membre tubulaire est causée par l'action des vagues, absorbant ainsi leur énergie.

2. Un dispositif d'absorption d'énergie houlomotrice selon la réclamation 1 où la surface d'au moins un bloc creux recevant la vague possède au minimum une ouverture, et au moins deux autres ouvertures accommodent le membre tubulaire.

3. Un dispositif d'absorption d'énergie houlomotrice selon n'importe quelle réclamation précédente comprenant deux ou plus de deux blocs creux arrangés dans un modèle régulier, tel que deux ou plus de deux membres tubulaires sont contenus dans ces blocs.

4. Un dispositif d'absorption d'énergie houlomotrice selon n'importe quelle réclamation précédente où au moins un membre tubulaire recevant de l'eau est connecté à un réservoir d'air.

5. Un dispositif d'absorption d'énergie houlomotrice selon la réclamation 4 où le réservoir d'air est connecté à au moins une turbine.

6. Un dispositif d'absorption d'énergie houlomotrice selon la réclamation 5 où au moins un autre membre tubulaire est connecté à une turbine par le réservoir d'air.

7. Un dispositif pour d'absorption d'énergie houlomotrice selon les réclamations 5 à 6 où au moins une turbine est connecté à une dynamo ou un alternateur.
